# EUROPÄISCHE PATENTSCHRIFT

(11) **EP 1 831 030 B1**
(45) Veröffentlichungstag und Bekanntmachung des Hinweises auf die Patenterteilung: **26.11.2014**
(21) Anmeldenummer: 05819518.1
(22) Anmeldetag: 07.12.2005
(51) Int. Cl.: G02B 27/22, B42D 25/00

(54) **STEREOGITTERBILD UND VERFAHREN ZU SEINER HERSTELLUNG**
STEREOSCOPIC GRID IMAGE AND METHOD FOR THE PRODUCTION THEREOF
IMAGE RETICULAIRE STEREOSCOPIQUE ET PROCEDE PERMETTANT DE LA PRODUIRE

(30) Priorität: 15.12.2004 DE 102004060673
(43) Veröffentlichungstag der Anmeldung: 12.09.2007
(73) Patentinhaber: Giesecke & Devrient GmbH, 81677 München (DE)
(72) Erfinder: KAULE, Wittich, 82275 Emmering (DE); DICHTL, Marius, 81371 München (DE)
(74) Vertreter: Zeuner Summerer Stütz
(86) Internationale Anmeldenummer: PCT/EP2005/013121
(87) Internationale Veröffentlichungsnummer: WO 2006/066732

(56) Entgegenhaltungen:
- EP-A- 1 564 605
- WO-A-99/30200
- WO-A2-2004/077468
- DE-A1- 10 348 619
- DE-A1-102004 006 771
- US-A- 5 447 335
- US-B1- 6 369 919

## Beschreibung

Die Erfindung betrifft ein Gitterbild zur Darstellung eines Stereobilds eines vorgegebenen räumlichen Bildmotivs. Die Erfindung betrifft ferner ein Verfahren zum Erzeugen eines derartigen Gitterbilds sowie einen Gegenstand mit einem solchen Gitterbild.

Es ist bekannt, dreidimensional wirkende Hologramme, holographische Stereogramme und dreidimensional wirkende Gitterbilder zur Echtheitsabsicherung von Kreditkarten, Wertdokumenten, Produktverpackungen und dergleichen einzusetzen. Ein dreidimensional wirkendes Bild wird dabei beispielsweise durch eine holographische Aufnahme eines dreidimensionalen Objekts erzeugt, durch eine elektronenstrahl-lithographische oder optisch lithographische Belichtung der computergenerierten Fouriertransformierten eines digital vorliegenden dreidimensionalen Motivs, oder durch technisch anspruchsvolle Verfahren zur Belichtung ineinander geschobener Ansichten eines Motivs, wobei das Motiv zuvor aus unterschiedlichen Richtungen aufgenommen oder konstruiert wurde.

Werden derartige 3-D Hologramme oder 3-D Gitterbilder bei ungünstigen Lichtverhältnissen betrachtet, wie etwa bei Betrachtung unter einer ausgedehnten Lichtquelle, oder unter einer Mehrzahl aus unterschiedlichen Richtungen einstrahlenden Lichtquellen, so verschwimmen die dreidimensionalen Darstellungen häufig, da dann verschiedene Ansichten, die eigentlich für die getrennte Betrachtung mit dem rechten und linken Auge entworfen und bestimmt sind, gleichzeitig zu sehen sind und einander überlagern.

Davon ausgehend liegt der Erfindung die Aufgabe zugrunde, ein Gitterbild zur Darstellung eines Stereobilds anzugeben, das ein vorgegebenes Bildmotiv bei guten Beleuchtungsverhältnissen räumlich darstellt, und das auch bei ungünstigen Lichtverhältnissen noch einen klaren Bildeindruck des vorgegebenen Bildmotivs liefert.

Diese Aufgabe wird durch das Gitterbild mit den Merkmalen des Hauptanspruchs gelöst. Ein Verfahren zum Herstellen eines solchen Gitterbilds und ein Gegenstand mit einem solchen Gitterbild sind in den nebengeordneten Ansprüchen angegeben. Weiterbildungen der Erfindung sind Gegenstand der Unteransprüche.

Erfingdungsgemäß sind bei einem gattungsgemäßen Gitterbild erste Bildbestandteile in der Bild-ebene des Stereobilds angeordnet, während zweite Bildbestandteile hinter der Bildebene des Stereobilds angeordnet sind.

Durch die Anordnung in der Bildebene verschwimmen die ersten Bildbestandteile auch bei schlechten Lichtverhältnissen nicht, sondern bieten dem Betrachter stets einen scharfen, wenn auch für sich genommen nur zweidimensionalen Eindruck des Bildmotivs. Bei guten Beleuchtungsverhältnissen erscheinen auch die hinter der Bildebene angeordneten Bildbestandteile scharf und lassen für den Betrachter ein räumlich wirkendes Stereobild des Bildmotivs entstehen.

Wird das erfindungsgemäße Stereogitterbild bei ungünstigen Lichtverhältnissen betrachtet, so erscheinen die zweiten Bildbestandteile zwar mehr oder weniger verschwommen, beeinflussen jedoch aufgrund der Aufteilung des Bildmotivs nicht die Erkennbarkeit des Motivs als Ganzem. Das dargestellte Motiv bleibt somit auch bei ungünstigen Lichtverhältnissen als solches erkennbar, lediglich die räumliche Wirkung geht ganz oder teilweise verloren.

In einer bevorzugten Ausgestaltung enthält das Gitterbild mehrere Ansichten des räumlichen Bildmotivs, die durch Fixierung des Bildmotivs an die Bildebene erhalten werden. Insbesondere ist eine ausgezeichnete Fläche des Bildmotivs, nämlich die Vorderfläche an der Bildebene fixiert. Die ausgezeichnete Fläche verändert sich dann bei der Projektion des Bildmotivs auf die Bildebene für unterschiedliche Betrachtungspunkte nicht Dadurch lassen sich Ansichtenfolgen konstruieren, die für die erfindungsgemäßen Stereogitterbilder besonders gut geeignet sind.

Erfindungsgemäß ist eine Vorderfläche des räumlichen Bildmotivs in der Bildebene des Stereobilds angeordnet. Dabei ist das räumliche Bildmotiv eine in die Tiefe gehende Darstellung einer alphanumerischen Zeichenfolge oder eines Logos, bei der eine ebene Vorderfläche der Buchstaben, Zahlen oder Zeichen in der Bildebene des Stereobilds angeordnet ist.

Die verschiedenen Ansichten des räumlichen Bildmotivs sind vorzugsweise in verschachtelt angeordneten Gitterbildbereichen abgelegt, deren Ausdehnung zumindest in einer Dimension unterhalb der Auflösungsgrenze des Auges liegt. Dabei bietet es sich an, die verschiedenen Ansichten in alternierend angeordneten Gitterbildstreifen abzulegen, deren Breite unterhalb der Auflösungsgrenze des Auges liegt. Es ist selbstverständlich auch denkbar, neben einer streifenartigen Anordnung eine geeignete kachelartige Aufteilung zu wählen.

In einer vorteilhaften Ausgestaltung sind die für die Erkennbarkeit des Bildmotivs entscheidenden Bildbestandteile durch Gitterbildbereiche mit einem beim Kippen des Gitterbilds konstanten Farbeindruck gebildet. Dies kann beispielsweise durch die in der ebenfalls anhängigen Patentanmeldung 10 2004 006 771.6 in Zusammenhang mit den dortigen Figuren 11 und 12 beschriebene und insoweit in die vorliegende Beschreibung aufgenommene Vorgehensweise erreicht werden.

Anstatt durch Gittermuster können die für die Erkennbarkeit des Bildmotivs entscheidenden Bildbestandteile auch durch eine Mattstruktur oder eine gedruckte Struktur gebildet sein, die bei Betrachtung keine diffraktiven Effekte zeigen. Die Ausgestaltung der erkennungswesentlichen Bildbestandteile als in der Bildebene liegende Gittermuster hat jedoch den Vorteil, dass dann auch in diesen Bildbestandteilen Farbvariationen beim Kippen vorgesehen sein können.

Die Erfindung enthält auch ein Verfahren zum Erzeugen eines Gitterbilds mit den Merkmalen von Anspruch 7.

Das räumliche Bildmotiv wird dabei zur Erzeugung verschiedener Ansichten mit einer ausgezeichneten Fläche, nämlich der Vorderfläche, des Bildmotivs mit der Bildebene fixiert.

Zur nicht holographischen Herstellung erfindungsgemäßer Gitterbilder wird zweckmäßig ein Gitterbild mit Gitterbildbereichen in einem Substrat erzeugt, wobei jeder Gitterbildbereich mit Gittermustern gefüllt wird, dessen Gitterkonstante und Winkelorientierung entsprechend der lokalen Farbe und der gewünschten Betrachtungsrichtung der jeweiligen Ansicht berechnet werden. Verfahren zur Berechnung der Gitterkonstanten und Winkelorientierungen sind in den ebenfalls anhängigen Patentanmeldungen 103 48 619.4 und 10 2004 006 771.6 angegeben, deren Offenbarung insoweit in die vorliegende Beschreibung aufgenommen wird.

Das Gitterbild wird vorzugsweise mittels eines optischen oder eines Elektronenstrahl-Lithographieverfahrens einem strahlungsempfindlichen Material, insbesondere einer auf einem Substrat aufgebrachten Resistschicht, eingeschrieben, um in diesem eine Zustandsänderung herbeizuführen, vorzugsweise eine Reliefstruktur zu erzeugen. In einer bevorzugten Weiterbildung wird nach der Herstellung einer Reliefstruktur eine Metallisierungsschicht auf das strahlungsempfindliche Material aufgebracht und davon eine galvanische Abformung erzeugt. Die Abformung oder eine weitere Abformung derselben können vorteilhaft als Prägestempel zum Prägen eines Gitterbildes in ein Substrat verwendet werden.

Gemäß einer bevorzugten Gestaltung wird das Gitterbild rasterfrei erzeugt.

Die Erfindung umfasst auch einen Gegenstand mit einem nach dem beschriebenen Verfahren erzeugten Stereogitterbild. In einer bevorzugten Ausgestaltung stellt der Gegenstand ein Sicherheitselement zum Aufbringen auf einen Datenträger, insbesondere einen Sicherheitsfaden, ein Etikett oder ein Transferelement, dar. Es ist ebenfalls bevorzugt, wenn der Gegenstand ein Datenträger, insbesondere eine Banknote, ein Wertdokument, ein Pass, eine Ausweiskarte oder eine Urkunde, ist. Der Gegenstand kann im Bereich des Gitterbilds eben oder gekrümmt, beispielsweise zylindrisch gekrümmt sein.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit einem Stereogitterbild,
- Fig. 2: ein erfindungsgemäßes Transfermaterial im Querschnitt,
- Fig. 3: eine genauere Darstellung des Stereogitterbilds der Fig. 1 in Aufsicht,
- Fig. 4: eine Aufsicht auf ein Stereogitterbild nach einem Ausführungsbeispiel der Erfindung,
- Fig. 5: in (a) bis (e) fünf für die Darstellung in einem erfindungsgemäßen Stereogitterbild geeignete 3-D-Ansichten eines Würfels,
- Fig. 6: in (a) ein Stereogitterbild mit einem Kulissenbild, dessen in verschiedener räumlicher Tiefe angeordnete Bildbestandteilgruppen in (b) bis (d) getrennt gezeigt sind, und
- Fig. 7 bis 9: weitere Maßnahmen zur Unterstützung klarer und deutlicher Darstellungen dreidimensionaler Stereogitterbilder, illustriert jeweils anhand der Darstellung eines Würfels.

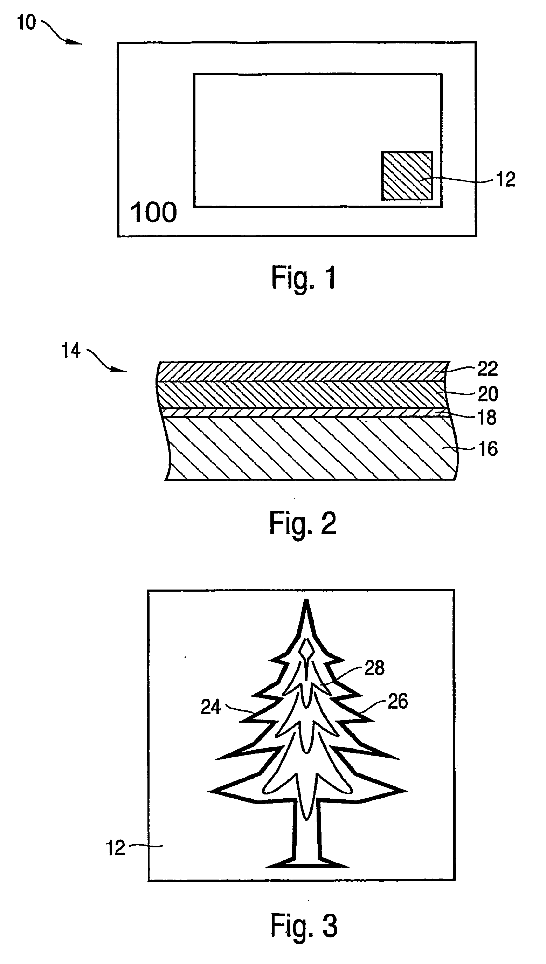

Die Erfindung wird nun am Beispiel einer Banknote erläutert. Fig. 1 zeigt eine schematische Darstellung einer Banknote 10, die auf ihrer Vorderseite mit einem Sicherheitselement in Form eines Stereogitterbilds 12 versehen ist. Bei guten Beleuchtungsverhältnissen und senkrechter oder leicht nach rechts oder links gekippter Betrachtung zeigt das Stereogitterbild 12 ein optisch ansprechendes dreidimensionales Bildmotiv. Wie nachfolgend im Detail erläutert, bleiben die für die Erkennbarkeit wesentlichen Bildteile des Bildmotivs sogar bei ungünstigen Lichtverhältnissen erkennbar, auch wenn der räumliche Effekt bei schlechter Beleuchtung schwächer wird oder ganz verschwindet.

Die Erfindung ist natürlich nicht auf Transferelemente und Banknoten beschränkt. Sie kann überall eingesetzt werden, wo Gitterbilder, insbesondere Stereogitterbilder, zur Anwendung kommen können, beispielsweise bei Uhrenzifferblättern und Modeschmuck, bei Etiketten auf Waren und Verpackungen, bei Sicherheitselementen auf Dokumenten, Ausweisen, Pässen, Kreditkarten, Gesundheitskarten usw. Bei Banknoten und ähnlichen Dokumenten kommen beispielsweise außer Transferelementen auch Sicherheitsfäden und außer Aufsichtselementen auch Durchsichtselemente, wie Durchsichtsfenster, zur Ausstattung mit Gitterbildern infrage. Dies ist in der ebenfalls anhängigen Anmeldung PCT/EP 2004/11497 ausführlich beschrieben, deren Offenbarung insoweit in die vorliegende Anmeldung aufgenommen wird.

Das Stereogitterbild 12 des Beispiels wurde vor dem Aufbringen auf die Banknote zunächst in einem Transfermaterial 14 erzeugt, welches in Fig. 2 im Querschnitt dargestellt ist.

Das Transfermaterial 14 enthält eine Trägerschicht 16, insbesondere eine Kunststofffolie, auf die ein Schichtaufbau 20 mit dem erfindungsgemäßen Stereogitterbild aufgebracht ist. Dabei kann es vorteilhaft sein, eine Trennschicht 18 zwischen dem Schichtaufbau 20 und der Trägerschicht 16 vorzusehen. Auf dem Schichtaufbau 20 des Transfermaterials 14 ist eine Klebeschicht 22, beispielsweise eine Heißschmelzklebeschicht, vorgesehen, mit der das Stereogitterbild auf dem abzusichernden Gegenstand befestigt werden kann. Zum Übertrag wird das Transfermaterial 14 auf den Gegenstand aufgelegt und die Klebeschicht 22 beispielsweise durch Wärme aktiviert. Anschließend wird das Transfermaterial von dem Gegenstand entfernt, wobei nur der aufgeklebte Schichtaufbau 20 auf dem abzusichernden Gegenstand verbleibt.

Fig. 3 (keine Ausführungsform der Erfindung) zeigt eine genauere Darstellung des Stereogitterbilds 12 der Fig. 1 in Aufsicht Zur Illustration ist als einfaches Bildmotiv ein Baum 24 mit einer breiten Umrisslinie 26 und mit im Inneren des Baums angeordneten Ästen 28 dargestellt. Das Bildmotiv "Baum" 24 wird durch diese Gestaltung in einen ersten Bildbestandteil "Baumumriss" 26 und einen zweiten Bildbestandteil "Äste" 28 zerlegt, wobei der erste Bildbestandteil 26 für die Erkennbarkeit des Bildmotivs entscheidend ist, während der zweite Bildbestandteil 28 für die Erkennbarkeit nur eine untergeordneter Bedeutung spielt und auch verschwommen erscheinen kann, ohne die Erkennbarkeit des Motivs "Baum" als Ganzem zu gefährden. In vielen Fällen wirken Motive, bei denen die vor bzw. hinter der Bildebene liegenden Bildteile etwas verschwommen erscheinen, wie fotographische Aufnahmen mit geringer Tiefenschärfe, die gerade durch den Kontrast von scharfen und verschwommenen Bildteilen sehr plastisch erscheinen.

In dem Stereogitterbild 12 ist der erste Bildbestandteil 26 in der Bildebene des Stereobilds angeordnet, so dass er auch bei schlechten Lichtverhältnissen nicht verschwimmt, sondern dem Betrachter stets einen scharfen, wenn auch für sich genommen nur zweidimensionalen Bildeindruck des Baumes 24 bietet. Der zweite Bildbestandteil 28 ist in einer Ebene vor dem ersten Bildbestandteil 26 angeordnet, ohne die Umrisslinie des ersten Bildbestandteils 26 über Gebühr zu verdecken, und dient der dreidimensionalen Wirkung des Stereogitterbilds 12.

Um einen mit dem Betrachtungswinkel variierenden Bildeindruck des Baummotivs 24 zu erhalten, werden mehrere Ansichten des Motivs aus unterschiedlichen Betrachtungsrichtungen dargestellt. Beispielsweise können fünf Ansichten für die Betrachtungswinkel -16°, -8°, 0°, +8° und +16° gewählt werden, so dass bei einem typischen Betrachtungsabstand des Stereogitterbilds 12 von etwa 30 cm dem rechten und linken Auge sowohl bei senkrechter als auch bei leicht nach rechts bzw. links gekippter Lage des Gitterbilds 12 jeweils ein Bild mit passender Perspektive angeboten wird.

Die verschiedenen Ansichten des Baummotivs 24 werden in alternierend angeordneten und mit Gittermustern gefüllten Gitterbildstreifen abgelegt, deren Breite unterhalb der Auflösungsgrenze des Auges liegt. Beispielsweise können die fünf Ansichten des Motivs von fünf Streifensätzen erzeugt werden, die jeweils mit einer Breite von 10 µm alternierend nebeneinander angeordnet sind, so dass jeweils jeder fünfte Streifen eines Streifensatzes im Stereogitterbild 12 erscheint.

Bei Beleuchtung erzeugt jeder der Streifensätze durch seine Gittermusterfüllung in der gewählten Betrachtungsrichtung eine der fünf Ansichten des Baummotivs 24. Die Gittermusterfüllungen sind dabei mit ihrer Gitterkonstante und Winkelorientierung entsprechend der lokalen Farbe und dem intendierten Betrachtungswinkel der jeweiligen Ansicht berechnet. Sie können beispielsweise nach den in den ebenfalls anhängigen Patentanmeldungen 103 48 619.4 und 10 2004 006 771.6 beschriebenen Verfahren zur Erzeugung ebener oder gekrümmter Gitterbilder berechnet werden.

Wird das Stereogitterbild 12 nun bei guten Lichtverhältnissen hin und her gekippt, so verbleibt der erste Bildbestandteil 26 "Baumumriss" stets in der Bildebene, während sich der zweite Bildbestandteil 28 vor dem Baumumriss 26 hin und her verschiebt, so dass für den Betrachter ein räumlich wirkendes Stereobild des Baumes 24 entsteht.

Wird das Stereogitterbild 12 dagegen bei ungünstigen Lichtverhältnissen, etwa bei Beleuchtung mit einer ausgedehnten Lichtquelle oder mit mehreren Lichtquellen aus verschiedenen Richtungen betrachtet, bei denen gewöhnliche Stereobilder verschwimmen, so bleibt der für die Erkennbarkeit wesentliche erste Bildbestandteil 26 "Baumumriss" unverändert gut erkennbar, da er in der Bildebene des Stereobilds liegt.

Der nicht in der Bildebene liegende zweite Bildbestandteil 28 "Äste" erscheint zwar je nach Güte der Beleuchtung mehr oder weniger verschwommen, jedoch ist er aufgrund der Aufteilung und der Konstruktion des Bildmotivs weder für die Erkennbarkeit entscheidend, noch beeinträchtigt er die Erkennbarkeit des ersten Bestandteils 26 wesentlich.

Das Bildmotiv "Baum" bleibt somit auch bei ungünstigen Lichtverhältnissen als solches erkennbar, lediglich die dreidimensionale Wirkung des Motivs geht ganz oder teilweise verloren.

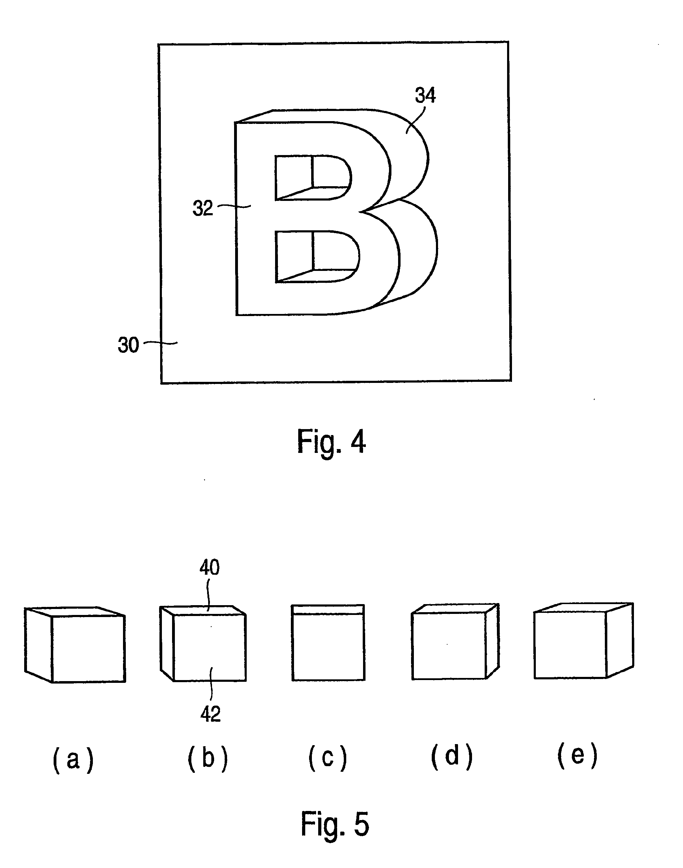

Ein Ausführungsbeispiel eines erfindungsgemäßen Stereogitterbilds 30 ist in Fig. 4 schematisch dargestellt. Viele der für dreidimensionale Darstellungen, wie den hier behandelten hologrammähnlichen Gitterbildern, eingesetzten Motive enthalten eine für das Motiv charakteristische Vorderfläche. Beispielsweise werden Schriftzüge oder Logos oft in einer Extrusionsdarstellung gezeigt, bei der eine ebene Vorderfläche 32 der Buchstaben oder Zahlen perspektivisch in die Tiefe fortgesetzt ist, so dass durch die gebildeten Seitenflächen 34 ein dreidimensionaler Eindruck des Schriftzugs oder Logos entsteht.

Erfindungsgemäß ist bei derartigen Motiven die Vorderfläche 32 des räumlichen Bildmotivs in der Bildebene des Stereobilds angeordnet, während sich die Seitenflächen 34 hinter die Bildebene erstrecken. Wird nun ein solches Stereogitterbild bei guten Lichtverhältnissen betrachtet, so bleibt die Vorderfläche 32 beim Kippen des Bildes stets in der Bildebene, während die sich perspektivisch verändernden Seitenflächen 34 einen räumlichen Eindruck des Schriftzugs oder Logos erzeugen.

Bei Betrachtung unter ungünstigen Lichtverhältnissen verschwimmt der Bildeindruck der Seitenflächen 34, während die hauptsächlich informationstragende Vorderfläche 32 wegen ihrer Anordnung in der Bildebene gut erkennbar bleibt. Der Schriftzug oder das Logo kann somit auch bei schlechten Lichtverhältnissen problemlos gelesen werden, wenn auch nur noch in zweidimensionaler Gestaltung. Lediglich der besondere räumliche Eindruck der Extrusionsdarstellung geht zu einem mehr oder weniger großen Teil verloren.

Eine spezielle Ausprägung dieses Ausführungsbeispiels erhält man, wenn folgender Aufbau gewählt wird. Belegt man die Vorderflächen 32 der Buchstaben oder Zahlen des Stereogitterbilds 30 entweder mit einem Beugungsgitter, das in unterschiedliche Raumrichtungen beugt, also einem so genannten Kreuzgitter, oder mit einer Struktur, die streuende Eigenschaften besitzt, wie etwa einer Mattstruktur, so können diese für die Erkennbarkeit des Motivs wichtigen Bereiche aus unterschiedlichsten Beobachtungspositionen optisch wahrgenommen und erkannt werden.

Werden die perspektivischen Fortsetzungen der Seitenflächen 34 in der oben beschriebenen Weise als lineare Gitter ausgeführt, entsteht bei guten Lichtverhältnissen der optische Eindruck eines Buchstabens oder einer Zahl mit sich perspektivisch verändernden Seitenflächen 34. Ein räumlicher Eindruck des Schriftzugs oder Logos entsteht. Verschlechtert der Beobachter die Beleuchtungsbedingungen des Stereobilds aktiv durch Kippen oder Rotieren des Stereobilds, so tragen zum optischen Eindruck des Stereogitterbilds 30 aufgrund des gewählten Gittertyps fast ausschließlich die Vorderflächen 32 bei, wohingegen die Seitenflächen 34 für den Beobachter fast verschwinden. Der räumliche Eindruck des Stereogitterbilds 30 verschwindet also beispielsweise bei Drehung um 90°, die Vorderflächen 32 der Buchstaben oder Zahlen bleiben aber weiterhin gut erkennbar.

Die Partien, die in der Zeichenebene liegen und damit auch bei schlechtem Licht erkennbar sind, können so ausgelegt werden, dass sie nicht nur in der für das Stereogitterbild relevanten Beobachtungsrichtung erkennbar sind, sondern auch aus anderen Richtungen, aus denen das Stereobild verschwindet, beispielsweise in der zur intendierten Beobachtungsrichtung senkrechten Richtung. Auch können die Partien, die in der Zeichenebene liegen und damit auch bei schlechtem Licht erkennbar sind, so ausgelegt werden, dass sie aus allen Richtungen erkennbar sind, etwa als Mattstruktur, während der Rest des Stereogitterbilds nur in bestimmten Richtungen erkennbar ist. Diese Varianten haben den Vorteil, dass man das Bild bei ungünstigen Lichtverhältnissen auch so betrachten kann, dass die verschwimmenden Partien nicht in Erscheinung treten.

Eine andere Art der Auslegung ist besonders attraktiv, wenn das Stereogitterbild im Vordergrund Strukturen enthält, die bei ungünstiger Beleuchtung die in der Zeichenebene liegenden und damit für bei schlechtem Licht relevante Partien überdecken. In diesem Fall können die in der Zeichenebene liegenden Partien für eine andere als die für gutes Licht relevante Beobachtungsrichtung ausgelegt werden.

Beispielsweise kann der Buchstabe B der Fig. 4 so ausgelegt werden, dass seine Rückseite in der Zeichenebene liegt und der Buchstabe als Stereobild aus der Zeichenebene herausragt. Die Rückseite ist also im Stereobild niemals sichtbar. Die Rückseite wird nun so ausgelegt, dass sie in einer anderen Betrachtungsrichtung als das Stereobild aufleuchtet. Die Rückseite ist damit bei schlechtem Licht in der hierfür vorgesehenen Betrachtungsrichtung erkennbar, stört aber in keiner Weise das Stereobild bei gutem Licht, welches für eine andere Betrachtungsrichtung ausgelegt ist.

Um die verschiedenen Ansichten eines darzustellenden räumlichen Bildmotivs zu gewinnen, wird mit Vorteil von der bei 3-D-Bildern üblicherweise gewählten Vorgehensweise abgewichen, wie nunmehr mit Bezug auf Fig. 5 erläutert

In der Regel werden die verschiedenen Ansichten eines räumlichen Bildmotivs für ein Stereobild aus verschiedenen Blickrichtungen von schräg oben gewonnen. Der abzubildende Gegenstand befindet sich dabei oft vor oder hinter der Bildebene, oder die Bildebene schneidet den Gegenstand mit einer sich zufällig ergebenden Schnittfläche. Dabei verschieben sich jedoch selbst bei einfachen Objekten, wie etwa dem in Fig. 5 zur Illustration dargestellten Würfel 40, alle erkennungswesentlichen Bildteile relativ zur Bildebene.

Erfindungsgemäß wird das darzustellende räumliche Bildmotiv daher vorzugsweise mit einer ausgezeichneten Fläche, nämlich der Vorderfläche, an der Bildebene fixiert Im Ausführungsbeispiel ist der Würfel 40 mit seiner Vorderfläche 42 an der Bildebene fixiert. Diese Vorderfläche 42 verändert sich dann bei der Projektion des Bildmotivs auf die Bildebene aus unterschiedlichen Betrachtungspunkten nicht, wie in Fig. 5a) bis e) gezeigt.

Für dreidimensionale Ansichten des Würfels 40 unter fünf verschiedenen Betrachtungswinkeln (Fig. 5(a): 40° von links, Fig. 5(b): 20° von links, Fig. 5(c): 0°, Fig. 5(d): 20° von rechts und Fig. 5(e): 40° von rechts) ergeben sich dabei die in der Figur dargestellten Ansichten.

Wie in Fig. 5 deutlich zu erkennen, bleiben die in der Zeichenebene liegenden Bildbestandteile, hier die Vorderfläche 42 des Würfels, bei dieser Art der Projektion unverändert, selbst wenn der Beobachtungspunkt geändert wird. Gegenstandspunkte, die vor oder hinter der Bildebene liegen, erscheinen je nach Beobachtungspunkt gegenüber ihrer Ausgangslage verschoben.

Insgesamt ergibt sich durch die gewählte Projektion eine Ansichtenfolge, die auch bei schlechten Lichtverhältnissen noch die Erkennbarkeit des Motivs gewährleistet, da lediglich der räumliche Effekt vermindert, die Klarheit der Darstellung der Vorderfläche jedoch nicht beeinträchtigt wird. Zweckmäßig werden bei dem Entwurf von Motiven die hauptsächlich informationstragenden Bildbestandteile in diesem Fall in die Vorderfläche des Motivs integriert.

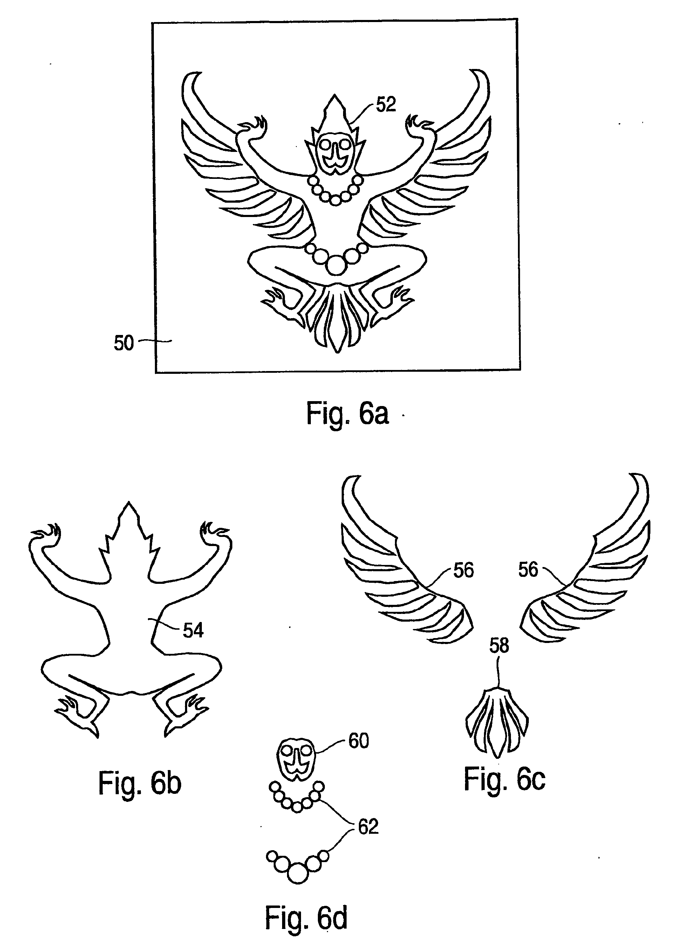

Das Stereogitterbild 50 der Fig. 6(a) (keine Ausführungsform der Erfindung) enthält, ähnlich wie das Baummotiv der Fig. 3, ein Kulissenbild mit mehreren jeweils parallel zur Bildebene des Stereobilds angeordneten Bildbestandteilen. Beispielhaft ist in Fig. 6 ein Fabelwesen 52 dargestellt, das in drei in verschiedener räumlicher Tiefe angeordnete Bildbestandteilgruppen zerlegt ist, welche jeweils getrennt in den Figuren 6(b) bis 6(d) gezeigt sind.

Die erste und für die Erkennbarkeit des Motivs entscheidende Bildbestandteilgruppe wird von dem in Fig. 6(b) dargestellten Körper 54 des Fabelwesens gebildet. Diese Bildbestandteilgruppe ist im Gitterbild 50 in die Bildebene gelegt, um eine gute Erkennbarkeit des Motivs als Ganzem auch bei schlechten Lichtverhältnissen zu gewährleisten.

Eine zweite Bildbestandteilgruppe wird von den Flügeln 56 und den Schwanzfedern 58 des Fabelwesens gebildet, wie in Fig. 6(c) gezeigt. Diese Bildbestandteilgruppe 56, 58 wird in eine bestimmte Entfernung hinter die Bildebene gelegt, beispielsweise in eine Entfernung, die 30% der Größe des Fabelwesens 52 entspricht. Eine dritte Bildbestandteilgruppe enthält die Maske 60 und den Schmuck 62 des Fabelwesens, wie in Fig. 6(d) gezeigt, und wird vor die Bildebene gelegt, beispielsweise ebenfalls um 30% der Größe des Fabelwesens 52.

Insgesamt zeigt das Gitterbild 50 durch diese Gestaltung bei guten Lichtverhältnissen eine scharfe, dreidimensionale Darstellung des geflügelten und geschmückten Fabelwesens 52. Auch bei ungünstigen Lichtverhältnissen ist der Körper 54 noch scharf zu erkennen, während die weniger bedeutsamen Bildteile 56 bis 62 verschwimmen, aber typischerweise zumindest noch teilweise erkennbar bleiben.

In alternativen Ausführungsformen kann der Körper 54 des Fabelwesens 52 anstatt durch ein Gitterbild auch durch eine Mattstruktur oder eine gedruckte Struktur gebildet werden, die bei Betrachtung keine diffraktiven Effekte zeigen.

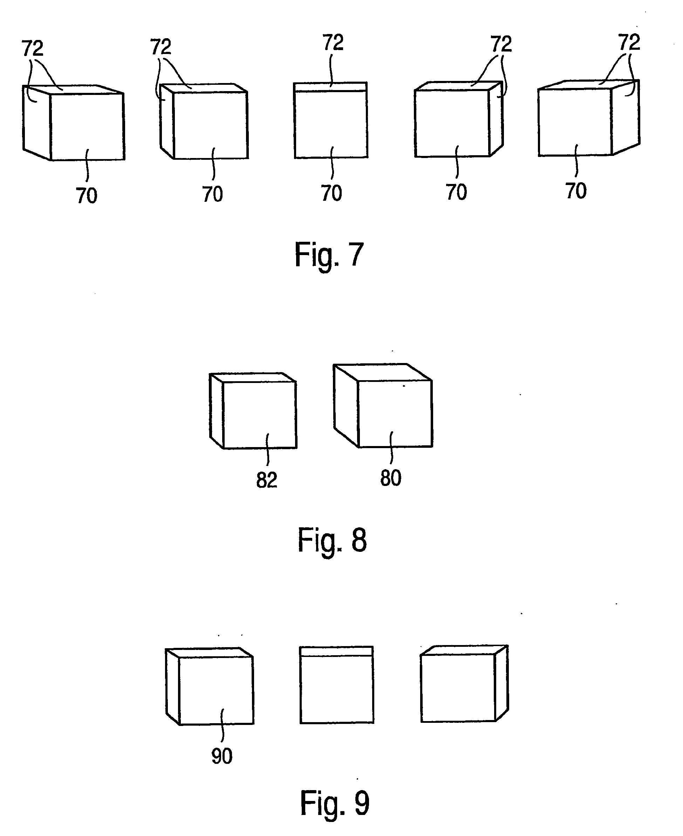

Die Figuren 7 bis 9 illustrieren weitere Maßnahmen, die zu einer klareren und deutlicheren Darstellung der dreidimensionalen Stereogitterbilder auch bei ungünstigen Lichtverhältnissen beitragen können.

Wie in Fig. 7 wieder beispielhaft anhand eines Würfels gezeigt, können die untergeordneten Motivteile 72, hier die sich in die Tiefe erstreckenden Seitenflächen des Würfels, in reduzierter Helligkeit ausgeführt werden, da die für die Erkennbarkeit des Bildmotivs entscheidenden Bildbestandteile 70 unabhängig von den Lichtverhältnissen deutlich zu erkennen sind.

Bei guter Beleuchtung leidet die klare und scharfe Darstellung nicht wesentlich unter dieser Helligkeitsreduzierung, während die verschwommene Darstellung der untergeordneten Motivteile 72 bei schlechter Beleuchtung durch die verminderte Leuchtkraft weniger ins Auge fällt.

Weiter hat es sich als vorteilhaft herausgestellt, wenn die Tiefe der dreidimensionalen Bildteile nicht zu groß gewählt wird. Fig. 8 zeigt einen Würfel 80 mit großer räumlicher Tiefe, während die erfindungsgemäß bevorzugte Würfeldarstellung 82 eine geringere räumliche Tiefe aufweist, und daher bei ungünstiger Beleuchtung weniger stark verschwimmt.

Schließlich kann, wie in Fig. 9 im Vergleich zur Fig. 7 dargestellt, der Kippwinkelbereich des Stereogitterbilds eingeschränkt werden. Während Fig. 7 einen Kippwinkelbereich von +/- 40° umfasst, enthalten die drei Ansichten der Fig. 9 nur einen Kippwinkelbereich von +/- 20°. Dadurch entfallen die ausgedehnten Seitenteile des Würfels 90, die bei ungünstigen Lichtverhältnissen am stärksten verschwimmen.

## Patentansprüche

1. Gitterbild zur Darstellung eines Stereobilds eines vorgegebenen räumlichen Bildmotivs, das erste und zweite Bildbestandteile aufweist, wobei
- die ersten Bildbestandteile in der Bildebene des Stereobilds angeordnet sind,
- die zweiten Bildbestandteile hinter der Bildebene des Stereobilds angeordnet sind, und
- das räumliche Bildmotiv eine in die Tiefe gehende Darstellung einer alphanumerischen Zeichenfolge oder eines Logos ist, bei der eine ebene Vorderfläche der Buchstaben, Zahlen oder Zeichen die ersten Bildbestandteile bildet, die in der Bildebene des Stereobilds angeordnet sind, und die Seiteinflächen der Buchstaben, Zahlen oder. Zeichen die zweiten Bildbestandteile bilden, die sich hinter die Bildebene erstrecken.

2. Gitterbild nach Anspruch 1, **dadurch gekennzeichnet, dass** das Gitterbild mehrere Ansichten des räumlichen Bildmotivs enthält, die durch Fixierung des Bildmotivs an die Bildebene erhalten werden.

3. Gitterbild nach Anspruch 2, **dadurch gekennzeichnet, dass** die verschiedene Ansichten des räumlichen Bildmotivs in verschachtelt angeordneten Gitterbildbereichen abgelegt sind, deren Ausdehnung zumindest in einer Dimension unterhalb der Auflösungsgrenze des Auges liegt.

4. Gitterbilds nach Anspruch 2 oder 3, **dadurch gekennzeichnet, dass** die verschiedenen Ansichten des räumlichen Bildmotivs in alternierend angeordneten Gitterbildstreifen abgelegt sind, deren Breite unterhalb der Auflösungsgrenze des Auges liegt.

5. Gitterbild nach wenigstens einem der Ansprüche 1 bis 4, **dadurch gekennzeichnet, dass** die ersten Bildbestandteile durch Gitterbildbereiche mit einem beim Kippen des Gitterbilds konstanten Farbeindruck gebildet sind.

6. Gitterbild nach wenigstens einem der Ansprüche 1 bis 4, **dadurch gekennzeichnet, dass** die ersten Bildbestandteile durch eine Mattstruktur oder eine gedruckte Struktur gebildet sind, die bei Betrachtung keine diffraktiven Effekte zeigen.

7. Verfahren zum Erzeugen eines Gitterbilds, das ein Stereobild eines vorgegebenen räumlichen Bildmotivs mit ersten und zweiten Bildbestandteilen zeigt, bei dem
- die ersten Bildbestandteile in der Bildebene des Stereobilds angeordnet werden, und
- die zweiten Bildbestandteile hinter der Bildebene des Stereobilds angeordnet werden, wobei
- das räumliche Bildmotiv eine in die Tiefe gehende Darstellung einer alphanumerischen Zeichenfolge oder eines Logos ist, bei der eine ebene Vorderfläche der Buchstaben, Zahlen oder Zeichen die ersten Bildbestandteile bildet, die in der Bildebene des Stereobilds angeordnet sind, und die Seitenflächen der Buchstaben, Zahlen oder Zeichen die zweiten Bildbestandteile bilden, die sich hinter die Bildebene erstrecken.

8. Verfahren nach Anspruch 7, **dadurch gekennzeichnet, dass** zur Erzeugung verschiedener Ansichten des Bildmotivs die Vorderfläche der Buchstaben, Zahlen oder Zeichen an der Bildebene fixiert wird.

9. Verfahren nach Anspruch 8, **dadurch gekennzeichnet, dass** die verschiedenen Ansichten des räumlichen Bildmotivs in verschachtelt angeordneten Gitterbildbereichen abgelegt werden, deren Ausdehnung zumindest in einer Dimension unterhalb der Auflösungsgrenze des Auges gewählt wird.

10. Verfahren nach Anspruch 8, **dadurch gekennzeichnet, dass** die verschiedenen Ansichten des räumlichen Bildmotivs in alternierend angeordneten Gitterbildstreifen abgelegt werden, deren Breite unterhalb der Auflösungsgrenze des Auges gewählt werden.

11. Verfahren nach wenigstens einem der Ansprüche 7 bis 10, **dadurch gekennzeichnet, dass** ein Gitterbild mit Gitterbildbereichen in einem Substrat erzeugt wird, wobei jeder Gitterbildbereich mit Gittermustern gefüllt wird, dessen Gitterkonstante und Winkelorientierung entsprechend der lokalen Farbe und der gewünschten Betrachtungsrichtung der jeweiligen Ansicht berechnet werden.

12. Verfahren nach wenigstens einem der Ansprüche 7 bis 11, **dadurch gekennzeichnet, dass** das Gitterbild mittels eines optischen oder eines Elektronenstrahl-Lithographieverfahrens einem strahlungsempfindlichen Material, insbesondere einer auf einem Substrat aufgebrachten Resistschicht eingeschrieben wird, um in diesem eine Zustandsänderung herbeizuführen, vorzugsweise eine Reliefstruktur zu erzeugen.

13. Verfahren nach Anspruch 12, **dadurch gekennzeichnet, dass** nach der Herstellung einer Reliefstruktur eine Metallisierungsschicht auf das strahlungsempfindliche Material aufgebracht wird und dass davon eine galvanische Abformung erzeugt wird.

14. Verfahren nach Anspruch 13, **dadurch gekennzeichnet, dass** die Abformung oder eine weitere Abformung derselben als Prägestempel zum Prägen eines Gitterbildes in ein Substrat verwendet wird.

15. Verfahren nach wenigstens einem der Ansprüche 7 bis **14, dadurch gekennzeichnet, dass** das Gitterbild rasterfrei erzeugt wird.

16. Gegenstand, insbesondere Datenträger oder Sicherheitselement zum Aufbringen auf einen Datenträger, mit einem Gitterbild nach einem der Ansprüche 1 bis 6.

17. Verwendung eines Gitterbilds nach einem der Ansprüche 1 bis 6 oder eines Gegenstands nach Anspruch 16 zur Sicherung von Waren beliebiger Art.

## Claims

1. A grating image for depicting a stereo image of a specified spatial image motif that comprises first and second image components,
- the first image components being arranged in the image plane of the stereo image,
- the second image components being arranged behind the image plane of the stereo image, and
- the spatial image motif being an in-depth depiction of an alphanumeric character string or of a logo, in which a flat front surface of the letters, numbers or characters forms the first image components that are arranged in the image plane of the stereo image, and the lateral surfaces of the letters, numbers or characters form the second image components, which extend behind the image plane.

2. The grating image according to claim 1, **characterized in that** the grating image includes multiple views of the spatial image motif, which are obtained by fixing the image motif to the image plane.

3. The grating image according to claim 2, **characterized in that** the different views of the spatial image motif are stored in nested grating image regions whose dimensions at least in one dimension lie below the resolution limit of the eye.

4. The grating image according to claim 2 or 3, **characterized in that** the different views of the spatial image motif are stored in grating image strips that are arranged in alternation and whose width lies below the resolution limit of the eye.

5. The grating image according to at least one of claims 1 to 4, **characterized in that** the first image components are formed by grating image regions having a color impression that is constant when the grating image is tilted.

6. The grating image according to at least one of claims 1 to 4, **characterized in that** the first image components are formed by a matte pattern or a printed pattern that display no diffractive effects when viewed.

7. A method of producing a grating image that displays a stereo image of a specified spatial image motif having first and second image components, in which
- the first image components are arranged in the image plane of the stereo image,
- the second image components are arranged behind the image plane of the stereo image,
- the spatial image motif being an in-depth depiction of an alphanumeric character string or of a logo, in which a flat front surface of the letters, numbers or characters forms the first image components that are arranged in the image plane of the stereo image, and the lateral surfaces of the letters, numbers or characters form the second image components, which extend behind the image plane.

8. The method according to claim 7, **characterized in that**, to produce different views of the image motif, the front surface of the letters, numbers or characters is fixed to the image plane.

9. The method according to claim 8, **characterized in that** the different views of the spatial image motif are stored in nested grating image regions whose dimensions at least in one dimension lie below the resolution limit of the eye.

10. The method according to claim 8, **characterized in that** the different views of the spatial image motif are stored in grating image strips that are arranged in alternation and whose width is chosen to be below the resolution limit of the eye.

11. The method according to at least one of claims 7 to 10, **characterized in that** a grating image having grating image regions is produced in a substrate, each grating image region being filled with grating patterns whose grating constant and angle orientation are calculated in accordance with the local color and the desired viewing direction of the corresponding view.

12. The method according to at least one of claims 7 to 11, **characterized in that** the grating image is inscribed by means of an optical or an electron beam lithography method in a radiation-sensitive material, especially a resist layer applied on a substrate, to induce in said material a state change, preferably to produce a relief pattern.

13. The method according to claim 12, **characterized in that**, after the manufacture of a relief pattern, a metalization layer is applied to the radiation-sensitive material, and **in that** a galvanic casting thereof is produced.

14. The method according to claim 13, **characterized in that** the casting or a further casting of the same is used as an embossing stamp to emboss a grating image in a substrate.

15. The method according to at least one of claims 7 to 14, **characterized in that** the grating image is produced grid-free.

16. An article, especially a data carrier or a security element for application to a data carrier, having a grating image according to one of claims 1 to 6.

17. A use of a grating image according to at least one of claims 1 to 6 or of an article according to claim 16 for securing goods of any kind.

## Revendications

1. Image réticulaire pour la représentation d'une image stéréoscopique d'un motif d'image spatial prédéterminé, laquelle présente des premières et deuxièmes composantes d'image, dans laquelle
- les premières composantes d'image sont disposées dans le plan d'image de l'image stéréoscopique,
- les deuxièmes composantes d'image étant disposées derrière le plan d'image de l'image stéréoscopique, et
- le motif d'image spatial étant une représentation allant en profondeur d'une séquence de caractères alphanumériques ou d'un logo où une surface antérieure plane des lettres, chiffres ou caractères forme les premières composantes d'image qui sont disposées dans le plan d'image de l'image stéréoscopique, et les surfaces latérales des lettres, chiffres ou caractères formant les deuxièmes composantes d'image qui s'étendent derrière le plan d'image.

2. Image réticulaire selon la revendication 1, **caractérisée en ce que** l'image réticulaire contient plusieurs vues du motif d'image spatial, lesquelles sont obtenues par fixation du motif d'image au plan d'image.

3. Image réticulaire selon la revendication 2, **caractérisée en ce que** les différentes vues du motif d'image spatial sont déposées dans des zones d'image réticulaire disposées de manière imbriquée dont l'étendue se situe au moins dans une dimension en-deçà de la limite de résolution de l'oeil.

4. Image réticulaire selon la revendication 2 ou 3, **caractérisée en ce que** les différentes vues du motif d'image spatial sont déposées dans des bandes d'image réticulaire disposées en alternance dont la largeur se situe en-deçà de la limite de résolution de l'oeil.

5. Image réticulaire selon l'une au moins des revendications 1 à 4, **caractérisée en ce que** les premières composantes d'image sont formées par des zones d'image réticulaire avec une apparence de couleur constante en faisant basculer l'image réticulaire.

6. Image réticulaire selon l'une au moins des revendications 1 à 4, **caractérisée en ce que** les premières composantes d'image sont formées par une structure matte ou une structure imprimée, lesquelles ne présentent aucun effet de diffraction lors de l'observation.

7. Procédé pour générer une image réticulaire qui montre un motif d'image spatial prédéfini avec des premières et deuxièmes composantes d'image, dans lequel
- les premières composantes d'image sont disposées dans le plan d'image de l'image stéréoscopique, et
- les deuxièmes composantes d'image étant disposées derrière le plan d'image de l'image stéréoscopique, moyennant quoi
- le motif d'image spatial est une représentation allant en profondeur d'une séquence de caractères alphanumériques ou d'un logo où une surface antérieure plane des lettres, chiffres ou caractères forme les premières composantes d'image qui sont disposées dans le plan d'image de l'image stéréoscopique, et les surfaces latérales des lettres, chiffres ou caractères forment les deuxièmes composantes d'image qui s'étendent derrière le plan d'image.

8. Procédé selon la revendication 7, **caractérisé en ce que**, pour la production de différentes vues du motif d'image, la surface antérieure des lettres, chiffres ou caractères est fixée au plan d'image.

9. Procédé selon la revendication 8, **caractérisé en ce que** les différentes vues du motif d'image spatial sont déposées dans des zones d'image réticulaire disposées de manière imbriquée dont l'étendue est choisie au moins dans une dimension en-deçà de la limite de résolution de l'oeil.

10. Procédé selon la revendication 8, **caractérisé en ce que** les différentes vues du motif d'image spatial sont déposées dans des bandes d'image réticulaire disposées en alternance dont la largeur est sélectionnée en-deçà de la limite de résolution de l'oeil.

11. Procédé selon l'une au moins des revendications 7 à 10, **caractérisé en ce qu'**une image réticulaire avec des zones d'image réticulaire est produite dans un substrat, chaque zone d'image réticulaire étant remplie avec des motifs réticulaires dont la constante de réseau et l'orientation angulaire sont calculées en fonction de la couleur locale et du sens d'observation souhaité de la vue respective.

12. Procédé selon l'une au moins des revendications 7 à 11, **caractérisé en ce que** l'image réticulaire est inscrite à l'aide d'un procédé optique ou lithographique à faisceau d'électrons sur un matériau sensible aux rayonnements, en particulier une couche de vernis appliquée sur un substrat, afin de produire un changement d'état dans celui-ci, de préférence afin de produire une structure en relief.

13. Procédé selon la revendication 12, **caractérisé en ce que**, après la fabrication d'une structure en relief, on applique une couche de métallisation sur le matériau sensible aux rayonnements et **en ce que** l'on produit à partir de cela un moulage galvanique.

14. Procédé selon la revendication 13, **caractérisé en ce que** le moulage, ou un autre moulage de ce même, est utilisé en tant que poinçon d'estampage pour l'estampage d'une image réticulaire dans un substrat.

15. Procédé selon l'une au moins des revendications 7 à 14, **caractérisé en ce que** l'image réticulaire est produite sans trame.

16. Objet, en particulier support de données ou élément de sécurité pour l'application sur un support de données, avec une image réticulaire selon l'une des revendications 1 à 6.

17. Utilisation d'une image réticulaire selon l'une des revendications 1 à 6 ou d'un objet selon la revendication 16 pour la protection d'articles de tous genres.
